# EUROPÄISCHE PATENTSCHRIFT

(11) **EP 2 515 492 B1**
(45) Veröffentlichungstag und Bekanntmachung des Hinweises auf die Patenterteilung: **18.09.2013**
(21) Anmeldenummer: 11163454.9
(22) Anmeldetag: 21.04.2011
(51) Int. Cl.: H04L 12/64, H04L 12/853

(54) **Verfahren zur Kommunikation in einem Automatisierungsnetzwerk**
Method for communicating in an automation network
Procédé de communication dans un réseau d'automatisation

(43) Veröffentlichungstag der Anmeldung: 24.10.2012
(73) Patentinhaber: Siemens Aktiengesellschaft, 80333 München (DE)
(72) Erfinder: Steindl, Günter, 92284 Poppenricht (DE)

(56) Entgegenhaltungen:
- EP-A1- 1 453 251
- WO-A1-2004/039012

## Beschreibung

Die Erfindung betrifft die Kommunikation in einem Automatisierungsnetzwerk, insbesondere die Kommunikation mit Echtzeit- und Nicht-Echtzeitsignalen in einem Automatisierungsnetzwerk.

Aus dem Stand der Technik sind Netzwerkknoten bekannt, die zur Weiterleitung von Echtzeitsignalen und von Nicht-Echtzeitsignalen ausgebildet sind. Dabei leitet ein einziges Modul die Echtzeitdaten und die Nicht-Echtzeitdaten weiter. Dieses Modul garantiert die Weiterleitung der Echtzeitsignale in Echtzeit, wohingegen die Weiterleitung der Nicht-Echtzeitsignale dementsprechend angepasst wird, dass die Echtzeitsignale in Echtzeit übertragen werden können. Bei der Weiterleitung der Nicht-Echtzeitsignale kann es daher zu Verzögerungen kommen.

Die WO 2004/039012 A1 betrifft eine Technik zum Übermitteln von Daten für Echtzeitanwendungen und Nicht-Echtzeitanwendungen auf einem Kommunikationsnetzwerk mit mehreren Knoten, die über Kommunikationswege miteinander verbunden sind, wobei die Datenübermittlung zyklisch und deterministisch erfolgt und die Daten für Echtzeitanwendungen priorisiert behandelt werden, so dass in einem Übermittlungszyklus zuerst alle Daten für Echtzeitanwendungen übergeben werden und in der Zeit, die noch bis zum nächsten Übermittlungszyklus, dann die Daten für Nicht-Echtzeitanwendungen, übergeben werden.

Die EP 1 453 251 A1 beschreibt ein Verfahren und ein schaltendes Koppelelement zum einfachen Scheduling von Echtzeit-Datentelegrammen bei kalkulierbaren, lastunabhängigen Zykluszeiten. Hierbei wird ein Sendezyklus in drei Phasen unterteilt. In einer ersten Phase werden nur Echtzeit-Datentelegramme versendet, in einer zweiten Phase Echtzeit- und Nicht-Echtzeit-Datentelegramme und in einer dritten Phase wird der Versand von langen Nicht-Echtzeit-Datentelegrammen unterbunden. Kurze Fülltelegramme können während der Phase versendet werden. Hierdurch wird gewährleistet, dass die Datenübertragung der Echtzeit-Datentelegramme reibungslos verläuft. Der Versand in bestimmten Phasen wird mittels der Datentelegramme zugeordneten Prioritäten geregelt.

Demgegenüber liegt der Erfindung die Aufgabe zugrunde, ein verbessertes Verfahren zur Echtzeitkommunikation in einem Automatisierungsnetzwerk, einen verbesserten Netzwerkknoten, ein verbessertes Automatisierungssystem und ein verbessertes computerlesbares Speichermedium zu schaffen.

Die der Erfindung zugrunde liegenden Aufgaben werden mit einem Verfahren nach Anspruch 1, einem Netzwerkknoten nach Anspruch 7, einem Automatisierungssystem nach Anspruch 8 und einem computerlesbaren Speichermedium nach Anspruch 9 gelöst. Ausführungsformen der Erfindung sind in den abhängigen Patentansprüchen gegeben.

Die Erfindung betrifft ein Verfahren zur Echtzeitkommunikation in einem Automatisierungsnetzwerk. Das Automatisierungsnetzwerk umfasst mehrere Netzwerkgeräte und zumindest einen Netzwerkknoten.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein-und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profinet-Protokoll (z. B. gemäß IEC 61158), ein Profinet IO-Protokoll, ein Protokoll gemäß AS-Interface, ein Protokoll gemäß IO-Link, ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Der Netzwerkknoten weist Netzwerkanschlüsse zum Empfang und zur Ausgabe von Signalen und ein Echtzeitmodul zur Weiterleitung von Echtzeitsignalen und ein Nicht-Echtzeitsignal zur Weiterleitung von Nicht-Echtzeitsignalen auf.

Zunächst werden durch den Netzwerkknoten Signale empfangen. Die Signale können zumindest ein Echtzeitsignal und zumindest ein Nicht-Echtzeitsignal umfassen. Nach Empfang der Signale wird das zumindest eine Echtzeitsignal und das zumindest eine Nicht-Echtzeitsignal durch das Echtzeitmodul detektiert. Mit anderen Worten werden die Signale also zunächst durch einen oder mehrere der Netzwerkanschlüsse empfangen und beide Signale werden zunächst an das Echtzeitmodul weitergeleitet. Es ist zu beachten, dass auch das Nicht-Echtzeitsignal zunächst an das Echtzeitmodul weitergeleitet wird, da dort die Detektion der Signalart erfolgt. Die Signalart ist hierbei entweder Echtzeitsignal oder Nicht-Echtzeitsignal.

Unter Echtzeitsignalen werden hier insbesondere solche Signale verstanden, die zur Echtzeitkommunikation in den Automatisierungsnetzwerken verwendet werden. Solche Kommunikation kann auch mit dem englischen Begriff Realtime-Kommunikation bezeichnet werden. Die Toleranz für eine Verzögerung eines Echtzeitsignals durch den Netzwerkknoten liegt üblicherweise im Millisekundenbereich. Echtzeitsignale werden in dem Automatisierungssystem beispielsweise für zyklische Kommunikation verwendet. Das heißt, dass die Echtzeitsignale in regelmäßigen Abständen übertragen werden. Echtzeitsignale werden auch in deterministischen Automatisierungsnetzwerken verwendet. Die Echtzeitsignale spielen hier insbesondere für die Determiniertheit des Automatisierungsnetzwerks eine große Rolle. Für die Determiniertheit ist eine möglichst kurze Verzögerung der Echtzeitsignale durch den Netzwerkknoten wichtig.

Nach der Detektion des zumindest einen Echtzeitsignals und des zumindest einen Nicht-Echtzeitsignals durch das Echtzeitmodul wird das zumindest eine Nicht-Echtzeitsignal an das Nicht-Echtzeitmodul weitergeleitet. Das zumindest eine Nicht-Echtzeitsignal wird dann an einen der Netzwerkanschlüsse zu einem Weiterleitungszeitpunkt weitergeleitet. Die Weiterleitung erfolgt über das Echtzeitmodul und das Echtzeitmodul kann die Weiterleitung unterbinden oder verzögern. Außerdem leitet das Echtzeitmodul das zumindest eine Echtzeitsignal an den Netzwerkanschluss weiter. Falls das Echtzeitmodul zu dem Weiterleitungszeitpunkt des Nicht-Echtzeitsignals das Echtzeitsignal an den Netzwerkanschluss weiterleitet, verzögert oder unterbindet das Weiterleitungsmodul die Weiterleitung des Nicht-Echtzeitsignals von dem Nicht-Echtzeitmodul an den Netzwerkanschluss. Die Weiterleitung des Nicht-Echtzeitsignals wird solange blockiert wie über den Netzwerkanschluss das Echtzeitsignal ausgegeben wird. Beispielsweise könnte auch noch ein weiteres Echtzeitsignal über den Netzwerkanschluss ausgegeben werden, wodurch sich die Weiterleitung des Nicht-Echtzeitsignals weiter verzögert. Beide Signale, also sowohl das Echtzeitsignal als auch das Nicht-Echtzeitsignal, werden über den Netzwerkanschluss ausgegeben. Dadurch, dass das Echtzeitmodul das Echtzeitsignal direkt weiterleitet und die Weiterleitung des Nicht-Echtzeitsignals solange unterbindet oder verzögert, erfährt das Echtzeitsignal eine geringe Verzögerung, wohingegen das Nicht-Echtzeitsignal eine größere Verzögerung erfahren kann.

Unter Nicht-Echtzeitsignalen werden hier insbesondere solche Signale verstanden, für die es unerheblich ist, ob sie eine Verzögerung bei der Weiterleitung durch den Netzwerkknoten erfahren. Dies können beispielsweise solche Signale sein, die nicht unmittelbar wichtig für den Produktionsprozess, der durch das Automatisierungsnetzwerk gesteuert wird, sind. Dies können zum Beispiel Nutzerdaten, Internetdaten oder Daten eines Dateidownloads sein.

Nach Ausführungsformen der Erfindung werden mehrere Signale, die Echtzeitsignale und Nicht-Echtzeitsignale umfassen, über jeden der Netzwerkanschlüsse des Netzwerkknotens empfangen und ausgegeben. Dies bedeutet nicht, dass gleichzeitig an allen Netzwerkanschlüssen Signale empfangen und ausgegeben werden. Vielmehr ist zu beachten, dass über einen gewissen Zeitraum über jeden der Netzwerkanschlüsse Signale empfangen und ausgegeben werden. Die Weiterleitung aller Nicht-Echtzeitsignale an einen der Netzwerkanschlüsse wird immer dann durch das Echtzeitmodul verzögert oder unterbunden, wenn das Echtzeitmodul zur gleichen Zeit zumindest ein Echtzeitsignal an den jeweiligen Netzwerkanschluss weiterleitet. Mit anderen Worten können gleichzeitig mehrere Signale empfangen werden. Das Echtzeitmodul detektiert die Echtzeitsignale und die Nicht-Echtzeitsignale. Falls eines der Nicht-Echtzeitsignale über den gleichen Netzwerkanschluss wie eines der Echtzeitsignale ausgegeben werden soll, unterbindet oder verzögert das Echtzeitmodul die Ausgabe des Nicht-Echtzeitsignals solange, wie der Netzwerkanschluss durch die Ausgabe des Echtzeitsignals belegt ist.

Nach Ausführungsformen der Erfindung erfolgt die Detektion des zumindest einen Echtzeitsignals und des zumindest einen Nicht-Echtzeitsignals dadurch, dass das Echtzeitmodul einen Indikator des zumindest einen Nicht-Echtzeitsignals und einen Indikator des zumindest einen Echtzeitsignals oder einen Signalinhalt des zumindest einen Echtzeitsignals und einen Signalinhalt des zumindest einen Nicht-Echtzeitsignals liest. Der Indikator oder der Signalinhalt umfassen jeweils einen Hinweis darauf, dass es sich um das zumindest eine Echtzeitsignal oder um das zumindest eine Nicht-Echtzeitsignal handelt.

Beispielsweise könnte ein erstes Bit oder eine erste Bitfolge des jeweiligen Signals der Hinweis darauf sein, dass es sich um ein Echtzeitsignal oder um ein Nicht-Echtzeitsignal handelt. Wenn beispielsweise das erste Bit eine 1 ist, handelt es sich um ein Echtzeitsignal, wohingegen es sich um ein Nicht-Echtzeitsignal handelt, wenn das erste Bit eine 0 ist. Alternativ dazu kann das Echtzeitmodul den Signalinhalt der Signale lesen. Aus dem Signalinhalt lässt sich dann schließen, ob es sich um ein Echtzeitsignal oder um ein Nicht-Echtzeitsignal handelt. Zu diesem Zweck können beispielsweise Definitionen von Echtzeitsignalen und/oder Nicht-Echtzeitsignalen in dem Echtzeitmodul gespeichert sein. Wenn beispielsweise definiert ist, dass ein Anschalten einer Pumpe ein Echtzeitsignal ist, ist dies im Echtzeitmodul gespeichert. Wenn nun das Echtzeitmodul als Signalinhalt liest, dass diese Pumpe angeschaltet werden soll, wird detektiert, dass es sich um ein Echtzeitsignal handelt.

Nach Ausführungsformen der Erfindung umfasst das Echtzeitmodul einen Puffer. Im Puffer wird das zumindest eine Nicht-Echtzeitsignal solange zwischengespeichert, wie die Weiterleitung des Nicht-Echtzeitsignals verzögert wird. Das Nicht-Echtzeitsignal muss also nicht im Nicht-Echtzeitmodul gespeichert bleiben, wenn die Weiterleitung verzögert wird. Zur Verzögerung der Weiterleitung kann das Echtzeitmodul das Nicht-Echtzeitsignal im Puffer zwischenspeichern und für die Weiterleitung für den Zeitraum der Speicherung verzögern. Für das Nicht-Echtzeitmodul ist es also unerheblich, ob das Nicht-Echtzeitsignal sofort oder verzögert weitergeleitet wird. Dies ist vorteilhaft, da das Echtzeitmodul somit ein Standardbaustein sein kann, der sowohl in echtzeitfähigen als auch in nicht-echtzeitfähigen Netzwerkknoten zum Einsatz kommen kann. Dies ist besonders vorteilhaft, wenn beispielsweise das Nicht-Echtzeitmodul erneuert werden muss aufgrund von Bestimmungen oder aufgrund von Reparaturen. In diesem Fall muss das Echtzeitmodul nicht gleichzeitig ausgetauscht werden. Das Nicht-Echtzeitmodul ist also unabhängig vom Echtzeitmodul austauschbar.

Nach Ausführungsformen der Erfindung wird zur Weiterleitung des Nicht-Echtzeitsignals von dem Nicht-Echtzeitmodul zu dem Netzwerkanschluss über das Echtzeitmodul ein interner Anschluss des Nicht-Echtzeitmoduls verwendet. Der interne Anschluss weist einen Anschlusstakt auf, der zur Weiterleitung des Nicht-Echtzeitsignals verwendet wird. Das Echtzeitmodul schaltet den Anschlusstakt ab, solange die Weiterleitung des zumindest einen Nicht-Echtzeitsignals an den Netzwerkanschluss verzögert wird. Die Weiterleitung des Nicht-Echtzeitsignals wird also dadurch verzögert, dass der Anschlusstakt des internen Anschlusses zwischen Nicht-Echtzeitmodul und Echtzeitmodul für die Zeit abgeschaltet wird, in der die Weiterleitung verzögert werden soll. Dies hat zur Folge, dass keinerlei Signale über diesen internen Anschluss weitergeleitet werden, solange der Anschlusstakt abgeschaltet ist.

In Ausführungsformen der Erfindung werden zur Weiterleitung der Nicht-Echtzeitsignale von dem Nicht-Echtzeitmodul zu dem Netzwerkanschluss über das Echtzeitmodul mehrere interne Anschlüsse des Nicht-Echtzeitmodul verwendet. Ein interner Anschluss ist jeweils einem der Netzwerkanschlüsse zugeordnet. Die internen Anschlüsse weisen jeweils einen Anschlusstakt auf, der zur Weiterleitung der Nicht-Echtzeitsignale verwendet wird. Das Echtzeitmodul schaltet den Anschlusstakt desjenigen internen Anschluss ab, der zu dem Netzwerkanschluss zugeordnet ist, der durch die Weiterleitung des Echtzeitsignals verwendet wird, solange die Weiterleitung des jeweiligen Nicht-Echtzeitsignals an den Netzwerkanschluss verzögert wird. Es wird also nur ein interner Anschluss abgeschaltet, wenn die Weiterleitung eines Nicht-Echtzeitsignals verzögert werden soll. Der interne Anschluss wird dadurch bestimmt, dass er einem Netzwerkanschluss zugeordnet ist, über den ein Echtzeitsignal ausgegeben wird. Der Anschlusstakt dieses internen Anschlusses wird solange abgeschaltet, wie die Weiterleitung des Nicht-Echtzeitsignals unterbrochen werden muss, um die Ausgabe des Echtzeitsignals zu gewährleisten.

In einer Alternative der Erfindung sendet das Echtzeitmodul zur Verzögerung der Weiterleitung des Nicht-Echtzeitsignals ein Pausensignal an das Nicht-Echtzeitmodul. Hierfür muss das Nicht-Echtzeitmodul das Pausensignal verstehen. Beispielsweise könnte als Pausensignal die IEEE 802.3x-1997 Pausenfunktion verwendet werden. Mit Hilfe dieser IEEE-Funktion kann das Senden an einen Port gesteuert werden. Beispielsweise kann das Pausensignal die Weiterleitung des Nicht-Echtzeitsignals um einen bestimmten Zeitwert verzögern. Falls eine längere Verzögerung gewünscht ist, kann dies entweder durch ein zweites Pausensignal dem Nicht-Echtzeitmodul mitgeteilt werden. Alternativ dazu oder zusätzlich kann durch das Pausensignal auch eine längere Verzögerung der Weiterleitung erzielt werden.

In einer anderen Alternative der Erfindung wird die Verzögerung der Weiterleitung des Nicht-Echtzeitsignals dadurch erreicht, dass ein Kollisionssignal an das Nicht-Echtzeitmodul gesendet wird. Das Echtzeitmodul sendet das Kollisionssignal an das Nicht-Echtzeitmodul, wenn gerade ein Echtzeitsignal über den Netzwerkanschluss ausgegeben wird, über den auch das Nicht-Echtzeitsignal ausgegeben werden soll. Ähnlich wie beim Pausensignal kann hier das Kollisionssignal eine Weiterleitung des Nicht-Echtzeitsignals verzögern. Die Weiterleitung kann für einen bestimmten Zeitwert verzögert werden. Eine längere Verzögerung lässt sich beispielsweise durch ein weiteres Versenden des Kollisionssignals an das Echtzeitmodul erreichen.

Ausführungsformen der Erfindung mit einem Puffer im Echtzeitmodul und einer Verzögerung der Weiterleitung durch ein Pausen- oder ein Kollisionssignal sind besonders vorteilhaft, da die Größe des Puffers dadurch verkleinert werden kann, dass die Anzahl der Nicht-Echtzeitsignale, die im Puffer gespeichert werden müssen, durch Verwenden der Pause oder der Kollisionsfunktion verringert werden kann. Beispielsweise können zwei Signale in dem Puffer gespeichert werden. Falls ein drittes Nicht-Echtzeitsignal weitergeleitet werden soll, kann die Pause oder die Kollisionsfunktion dazu verwendet werden, die Weiterleitung des Signals zu verzögern. Es ist also zur Verzögerung mehrerer Signale nicht notwendig, dass der Puffer alle diese Signale speichert. Eine Kombination der Verwendung des Puffers mit der Verwendung der Pause und/oder Kollisionsfunktion ist daher vorteilhaft, da die Größe des Puffers begrenzt ist, aber trotzdem der Puffer zur Verzögerung der Weiterleitung zur Verfügung steht.

Die Verwendung des Puffers ist vorteilhaft, um zu verhindern, dass im Nicht-Echtzeitmodul besonders viele Nicht-Echtzeitsignale gespeichert werden müssen, da ihre Weiterleitung verzögert werden muss. Durch den Puffer wird es ermöglicht, Nicht-Echtzeitsignale im Echtzeitmodul zu speichern. Somit müssen nur zusätzliche Nicht-Echtzeitsignale durch das Nicht-Echtzeitmodul gespeichert werden, solange deren Weiterleitung verzögert werden soll. Dadurch wird es ermöglicht, dass der Signalspeicher des Nicht-Echtzeitmoduls verringert wird.

In einem weiteren Aspekt betrifft die Erfindung einen Netzwerkknoten für ein Automatisierungsnetzwerk. Der Netzwerkknoten hat Netzwerkanschlüsse zum Empfang und zur Ausgabe von Signalen. Die Signale umfassen zumindest ein Echtzeitsignal und zumindest ein Nicht-Echtzeitsignal. Außerdem umfasst der Netzwerkknoten ein Echtzeitmodul zur Detektion des zumindest einen Echtzeitsignals und des zumindest einen Nicht-Echtzeitsignals. Der Netzwerkknoten umfasst außerdem ein Nicht-Echtzeitmodul und Mittel zur Weiterleitung des zumindest einen Nicht-Echtzeitsignals an das Nicht-Echtzeitmodul. Ferner umfasst der Netzwerkknoten Mittel zur Weiterleitung des Nicht-Echtzeitsignals an einen der Netzwerkanschlüsse zu einem Weiterleitungszeitpunkt. Die Weiterleitung erfolgt dabei über das Echtzeitmodul und das Echtzeitmodul ist zur Unterbindung und/oder zur Verzögerung der Weiterleitung an den Netzwerkanschluss ausgebildet. Das Echtzeitmodul ist außerdem dazu ausgebildet, das Echtzeitsignal an den Netzwerkanschluss weiterzuleiten. Außerdem ist das Echtzeitmodul so ausgebildet, dass die Weiterleitung des Nicht-Echtzeitsignals an den Netzwerkanschluss dann unterbunden oder verzögert wird, wenn zu dem Weiterleitungszeitpunkt das Echtzeitsignal an den Netzwerkanschluss weitergeleitet wird. Mit anderen Worten verzögert oder unterbindet das Echtzeitmodul die Ausgabe des Nicht-Echtzeitsignals über den Netzwerkanschluss, wenn zum gleichen Zeitpunkt ein Echtzeitsignal über den Netzwerkanschluss ausgegeben wird.

In noch einem weiteren Aspekt betrifft die Erfindung ein Automatisierungssystem mit zumindest einem Netzwerkknoten nach Ausführungsformen der Erfindung.

Außerdem betrifft die Erfindung in einem weiteren Aspekt ein computerlesbares Speichermedium mit Instruktionen, die bei Ausführung durch Prozessormittel eines Netzwerkknotens den Netzwerkknoten zur Ausführung eines Verfahrens nach Ausführungsformen der Erfindung veranlassen.

Nachfolgend werden Ausführungsformen der Erfindung anhand der Figuren näher erläutert. Es zeigen:
- FIG 1: ein Blockdiagramm eines Netzwerkknotens nach Ausführungsformen der Erfindung;
- FIG 2: ein Blockdiagramm eines Echtzeitmoduls eines Netzwerkknotens; und
- FIG 3: ein Verfahren nach Ausführungsformen der Erfindung.
Elemente der nachfolgenden Figuren werden mit denselben Bezugszeichen gekennzeichnet, wenn die Funktion dieser Elemente identisch ist.

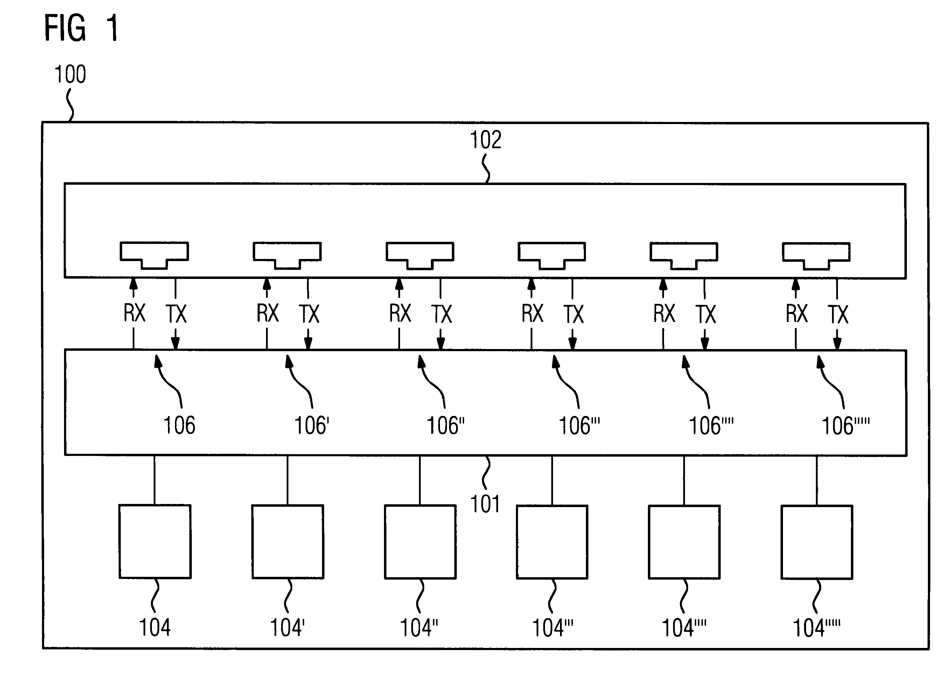

FIG 1 ist ein Blockdiagramm eines Netzwerkknotens 100 mit einem Echtzeitmodul 101, einem Nicht-Echtzeitmodul 102 und mehreren Netzwerkanschlüssen 104. Das Echtzeitmodul ist mit dem Nicht-Echtzeitmodul über mehrere interne Anschlüsse 106 verbunden.

Signale können von dem Netzwerkknoten 100 über die Netzwerkanschlüsse 104 empfangen werden. Die Signale können Echtzeit und Nicht-Echtzeitsignale umfassen. Die Signale werden zunächst an das Echtzeitmodul 101 weitergeleitet. Dort wird detektiert, ob es sich um ein Echtzeitsignal oder ein Nicht-Echtzeitsignal handelt. Falls es sich um ein Nicht-Echtzeitsignal handelt, wird das Nicht-Echtzeitsignal über einen der internen Anschlüsse 106 an das Nicht-Echtzeitmodul 102 ausgegeben. Das Nicht-Echtzeitmodul leitet das empfangene Signal über einen anderen der internen Anschlüsse 106 wieder zurück an das -Echtzeitmodul 101. Mit anderen Worten wird das Nicht-Echtzeitsignal beispielsweise über einen ersten internen Anschluss 106' von dem Nicht-Echtzeitmodul 102 empfangen und über einen zweiten internen Anschluss 106" wieder zurück an das Echtzeitmodul 101 ausgegeben. Das Signal wird also über einen ersten internen Anschluss empfangen und über einen zweiten internen Anschluss ausgegeben.

Das Echtzeitmodul leitet dann das Nicht-Echtzeitsignal an einen der Netzwerkanschlüsse 104 weiter, wo das Signal ausgegeben wird. Jedem Netzwerkanschluss 104 ist beispielsweise ein interner Anschluss 106 zugeordnet. Das heißt, dass ein Signal, das über den Anschluss 104'empfangen wird, über den internen Anschluss 106'an das Nicht-Echtzeitmodul 102 weitergeleitet wird. Wenn ein Signal beispielsweise über den internen Anschluss 106"' von dem Nicht-Echtzeitmodul 102 an das Echtzeitmodul 101 weitergeleitet wird, wird das Nicht-Echtzeitsignal auch über den Netzwerkanschluss 104ʹʹʹ ausgegeben. Das Nicht-Echtzeitmodul entscheidet also darüber, über welchen der Netzwerkanschlüsse 104 das Nicht-Echtzeitsignal ausgegeben wird.

Wenn ein Echtzeitsignal empfangen wird, wird dies durch das Echtzeitmodul 101 detektiert. Das Echtzeitmodul 101 leitet dann das Echtzeitmodul an einen der Netzwerkanschlüsse 104 weiter, von wo das Echtzeitsignal ausgegeben wird. Beispielsweise wird ein Echtzeitsignal über den Netzwerkanschluss 104ʹʹʹʹ empfangen und vom Echtzeitmodul 101 über den Netzwerkanschluss 104ʹʹʹʹʹ ausgegeben. Die Weiterleitung des Echtzeitsignals erfolgt also durch das Echtzeitmodul 101.

Der Netzwerkknoten 100 kann also dazu benutzt werden, Echtzeitsignale und Nicht-Echtzeitsignale in einem Automatisierungsnetzwerk weiterzuleiten. Sowohl Echtzeitsignale als auch Nicht-Echtzeitsignale können über einen der Netzwerkanschlüsse 104 empfangen und über einen anderen der Netzwerkanschlüsse 104 ausgegeben werden. So werden Signale durch den Netzwerkknoten 100 von einem ersten Netzwerkgerät des Automatisierungsnetzwerks empfangen und an ein zweites Netzwerkgerät des Automatisierungsnetzwerks weitergeleitet.

Es ist vorteilhaft, ein Echtzeitmodul 101 und ein Nicht-Echtzeitmodul 102 zu verwenden, da das Nicht-Echtzeitmodul 102 beispielsweise unabhängig von dem Echtzeitmodul 101 ausgetauscht werden kann. Außerdem ist es möglich, weitere Netzwerkanschlüsse an den Netzwerkknoten 100 anzubringen. Falls über diese Netzwerkanschlüsse die Weiterleitung von Echtzeitsignalen erforderlich ist, wird für diese Anschlüsse auch ein Echtzeitmodul 101 und ein Nicht-Echtzeitmodul 102 verwendet. Falls für die weiteren Anschlüsse keine Weiterleitung von Echtzeitsignalen erforderlich ist, reicht hier lediglich ein Nicht-Echtzeitmodul analog zum Echtzeitmodul 102. So kann kostengünstig ein Netzwerkknoten 100 hergestellt werden, der beispielsweise eine erste Anzahl von Netzwerkanschlüssen aufweist, die zur Weiterleitung von Echtzeitsignalen ausgebildet sind und eine zweite Anzahl von Netzwerkanschlüssen, die nur zur Weiterleitung von Nicht-Echtzeitsignalen ausgebildet sind. Kosten können dadurch gespart werden, dass nicht unbedingt jeder Anschluss zur Weiterleitung von Echtzeitsignalen ausgebildet sein muss.

Wenn nun Signale durch den Netzwerkknoten 100 über die Netzwerkanschlüsse 104 empfangen werden, detektiert das Echtzeitmodul 101, ob es sich um Echtzeit und/oder Nicht-Echtzeitsignale handelt. Beispielsweise könnte zeitgleich über den Anschluss 104'ein Nicht-Echtzeitsignal und über den Anschluss 104ʹʹ ein Echtzeitsignal empfangen werden. Das Nicht-Echtzeitsignal wird dann über den Anschluss 106' an das Nicht-Echtzeitmodul 102 weitergeleitet. Außerdem leitet das Echtzeitmodul das Echtzeitsignal beispielsweise an den Netzwerkanschluss 104"' weiter. Die Information, an welchem der Netzwerkanschlüsse 104 das Echtzeitmodul 101 das Echtzeitsignal weiterleiten soll, ist von dem Signal umfasst. Beispielsweise ist diese Information eine IP-Adresse und das Echtzeitmodul 101 entscheidet aufgrund der IP-Adresse, über welchen der Netzwerkanschlüsse 104 das Echtzeitsignal ausgegeben werden soll. Analog dazu entscheidet das Nicht-Echtzeitmodul 102, über welchen der internen Anschlüsse 106 das Nicht-Echtzeitsignal ausgegeben werden soll. Beispielsweise gibt das Nicht-Echtzeitsignal 102 das Nicht-Echtzeitsignal über den internen Anschluss 106"' an das Echtzeitmodul 101 aus. Dies bedeutet, dass das Nicht-Echtzeitsignal und das Echtzeitsignal über den Netzwerkanschluss 104ʺʹ ausgegeben werden soll. Da dies nicht gleichzeitig geschehen kann, verzögert das Echtzeitmodul 101 die Ausgabe des Nicht-Echtzeitsignals, sodass das Echtzeitsignal ohne Verzögerung ausgegeben werden kann. Die Verzögerung der Ausgabe kann beispielsweise dadurch geschehen, dass eine Weiterleitung des Nicht-Echtzeitsignals von dem Nicht-Echtzeitmodul an das Echtzeitmodul unterbunden oder verzögert wird. Alternativ oder zusätzlich dazu könnte das Echtzeitmodul 101 das Nicht-Echtzeitsignal in einem Puffer (nicht dargestellt in FIG 1) zwischenspeichern. Wenn das Echtzeitsignal über den Netzwerkanschluss 104"' ausgegeben wurde, wird im Anschluss daran das Nicht-Echtzeitsignal über den Anschluss 104ʹʹʹ ausgegeben.

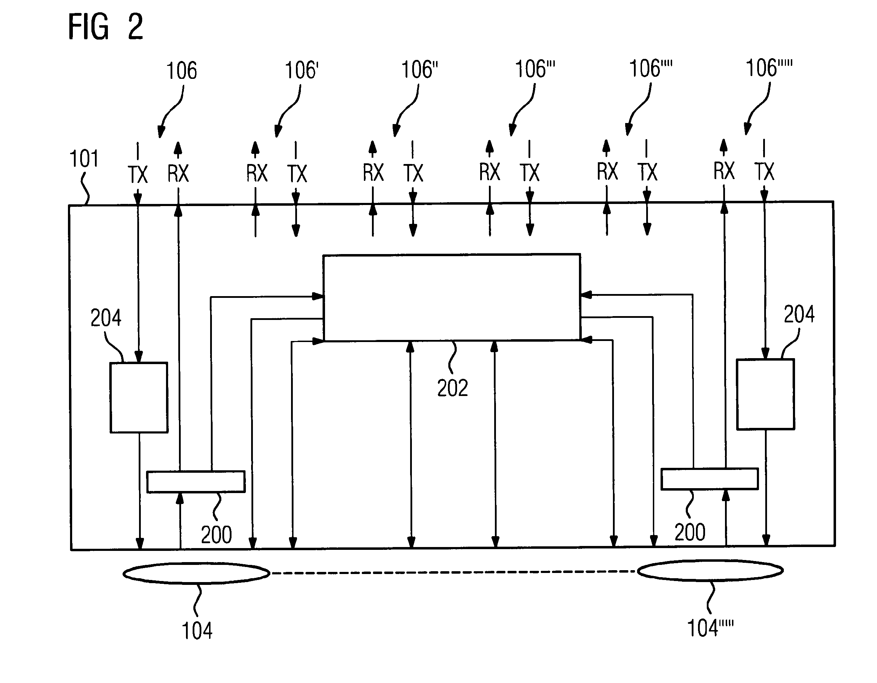

FIG 2 ist ein Blockdiagramm eines Echtzeitmoduls 101. Das Echtzeitmodul 101 umfasst Detektionsmittel 200, Weiterleitungsmittel 202 und Puffer 204. Das Echtzeitmodul 101 ist über die internen Anschlüsse 106 mit dem hier nicht dargestellten Nicht-Echtzeitmodul verbunden. Zur Ausgabe der Echtzeit und der Nicht-Echtzeitsignale werden die Netzwerkanschlüsse 104 des Netzwerkknotens 100 genutzt.

Wenn nun ein Signal durch das Echtzeitmodul 101 empfangen wird, detektieren die Detektionsmittel 200, ob es sich um ein Nicht-Echtzeitsignal oder ein Echtzeitsignal handelt. Falls es sich um ein Nicht-Echtzeitsignal handelt, wird das Nicht-Echtzeitsignal über einen der internen Anschlüsse 106 an das hier nicht dargestellte Nicht-Echtzeitmodul weitergeleitet. Fall es sich um ein Echtzeitsignal handelt, wird das Echtzeitsignal an die Weiterleitungsmittel 202 des Echtzeitmoduls 101 weitergeleitet. Die Detektion, ob es sich um ein Echtzeitsignal oder um ein Nicht-Echtzeitsignal handelt, geschieht beispielsweise dadurch, dass der Signalinhalt des Signals gelesen wird oder dass ein Indikator des Signals gelesen wird. Beispielsweise könnten bestimmte Bits des Signals als Indikator benutzt werden. Alternativ dazu könnten die Detektionsmittel 200 zur Auslesung des Signals ausgebildet sein. In diesem Fall analysieren die Detektionsmittel 200 den Signalinhalt. Die Detektionsmittel 200 sind ferner dazu ausgebildet, unter Verwendung des Signalinhalts zu entscheiden, ob es sich um ein Echtzeitsignal oder um ein Nicht-Echtzeitsignal handelt. Beispielsweise können bestimmte Signale als Echtzeitsignale dadurch definiert sein, dass sie in einer Datenbank der Detektionsmittel 200 gespeichert sind.

Wenn nun ein Echtzeitsignal an die Weiterleitungsmittel 202 weitergeleitet wurde, entscheiden die Weiterleitungsmittel 202, über welchen der Netzwerkanschlüsse 104 das Echtzeitsignal ausgegeben werden soll. Dies kann beispielsweise dadurch erfolgen, dass das Signal an eine bestimmte IP-Adresse oder an eine bestimmte MAC-Adresse gesendet werden soll. Alternativ oder zusätzlich dazu kann die Weiterleitung so erfolgen, dass Informationen in dem Signal enthalten sind, die bestimmen, wohin das Signal weitergeleitet werden soll. Hierzu kann es auch erforderlich sein, dass im Netzwerkknoten gespeicherte Informationen zusätzlich benötigt werden. Beispielsweise kann das Signal die Information enthalten, dass es in einen bestimmten Teilbereich des Netzwerks weitergeleitet werden soll. Der Netzwerkknoten hat beispielsweise in einem Datenspeicher Informationen gespeichert, dass Signale, die in den bestimmten Teilbereich weitergeleitet werden sollen, über einen diesem Teilbereich zugeordneten Netzwerkanschluss ausgegeben werden. Die Weiterleitungsmittel 202 sind dazu ausgebildet, auf Grundlage der IP-Adresse, der MAC-Adresse oder der zuvor beschriebenen Informationen zu entscheiden, über welchen der Netzwerkanschlüsse 104 das Echtzeitsignal ausgegeben werden soll. Die Weiterleitungsmittel 202 geben dann das Echtzeitsignal über einen der Netzwerkanschlüsse 104 aus.

Wenn die Detektionsmittel 200 detektieren, dass es sich um ein Nicht-Echtzeitsignal handelt, wird das Nicht-Echtzeitsignal über einen der internen Anschlüsse 106 an das Nicht-Echtzeitmodul weitergeleitet. Das Nicht-Echtzeitmodul entscheidet dann, über welchen der internen Anschlüsse das Nicht-Echtzeitsignal zurück an das Echtzeitmodul 101 ausgegeben werden soll. Wenn beispielsweise das Signal über den internen Netzwerkanschluss 106' an das Echtzeitmodul 101 zurück ausgegeben wird, wird das Nicht-Echtzeitsignal über den dazu zugeordneten Netzwerkanschluss 104' ausgegeben. Jeder interne Anschluss 106 entspricht also einem Netzwerkanschluss 104. Wenn ein Nicht-Echtzeitsignal über einen der internen Anschlüsse 106 an das Echtzeitmodul 101 ausgegeben wird, ist auf Grundlage der Zuordnung des internen Anschluss 106 zu einem bestimmten Netzwerkanschluss 104 klar, dass das Nicht-Echtzeitsignal über diesen Netzwerkanschluss ausgegeben werden soll.

Wenn nun beispielsweise die Weiterleitungsmittel 202 ein Echtzeitsignal über den Netzwerkanschluss 104' ausgeben und gleichzeitig das Echtzeitmodul 101 ein Nicht-Echtzeitsignal über den internen Anschluss 106' von dem Nicht-Echtzeitmodul empfängt, wird die Weiterleitung des Nicht-Echtzeitsignals solange verzögert, wie der Netzwerkanschluss 104' durch die Weiterleitung des Echtzeitsignals belegt ist. Vorzugsweise wird die Weiterleitung des Nicht-Echtzeitsignals auch dann verzögert oder unterbunden, wenn bereits detektiert wurde, dass ein Echtzeitsignal über den Netzwerkanschluss 104' ausgegeben werden soll, aber noch nicht ausgegeben wird. Dies hat den Vorteil, dass der Netzwerkanschluss 104' nicht belegt ist, wenn ein Echtzeitsignal über ihn ausgegeben werden soll. Die Verzögerung der Weiterleitung kann beispielsweise dadurch geschehen, dass ein Puffer 204 zur Zwischenspeicherung des Nicht-Echtzeitsignals verwendet wird. In diesem Fall wird das Nicht-Echtzeitsignal von dem Nicht-Echtzeitmodul empfangen, im Puffer 204 zwischengespeichert und erst dann über den Netzwerkanschluss 104' ausgegeben, wenn die Weiterleitung des Nicht-Echtzeitsignals über den Netzwerkanschluss 104' beendet wurde. Zusätzlich oder alternativ dazu kann das Echtzeitmodul 101 ein Signal an das Nicht-Echtzeitmodul senden, das die Weiterleitung des Nicht-Echtzeitsignals an das Echtzeitmodul 101 verzögert oder unterbindet. Dies kann beispielsweise ein Pausensignal oder ein Kollisionssignal sein. In diesem Fall verzögert das Nicht-Echtzeitmodul die Ausgabe des Nicht-Echtzeitsignals über einen der internen Anschlüsse 106 an das Echtzeitmodul 101. Wenn eine längere Verzögerung gewünscht wird, kann ein zweites Pausen- oder Kollisionssignal von dem Echtzeitmodul 101 an das Nicht-Echtzeitmodul gesendet werden.

Eine weitere Möglichkeit, die Weiterleitung des Nicht-Echtzeitsignals von dem Nicht-Echtzeitmodul an das Echtzeitmodul 101 zu verzögern, ist, den Anschlusstakt des internen Anschlusses 106, über den das Nicht-Echtzeitsignal weitergeleitet werden soll, auszuschalten. Dies geschieht durch das Echtzeitmodul 101, wenn die Weiterleitung eines Nicht-Echtzeitsignals über diesen internen Anschluss 106 verzögert werden soll. Der Anschlusstakt wird solange ausgeschaltet, wie die Ausgabe des Nicht-Echtzeitsignals verzögert werden soll. Wenn der Anschlusstakt des internen Anschlusses 106 ausgeschaltet wird, ist eine Ausgabe eines Signals über diesen Anschluss unmöglich. So wird also die Ausgabe des Nicht-Echtzeitsignals an das Echtzeitmodul 101 verzögert. Wenn das Nicht-Echtzeitsignal an das Echtzeitmodul 101 weitergeleitet werden soll, schaltet das Echtzeitmodul 101 den Anschlusstakt dieses internen Anschlusses wieder an. Das Nicht-Echtzeitsignal wird sodann an das Echtzeitmodul 101 ausgegeben.

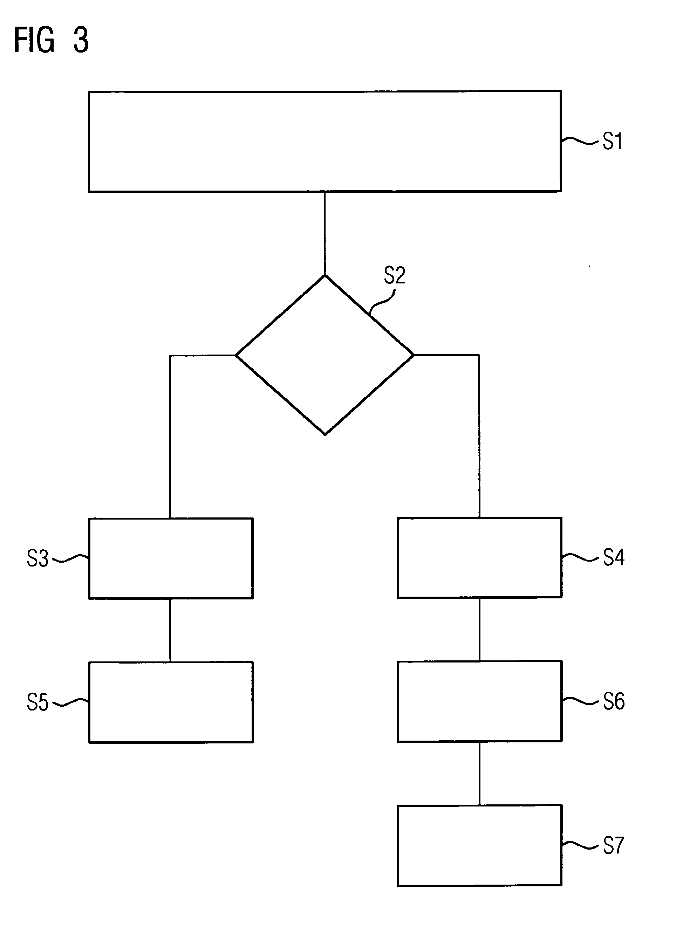

FIG 3 ist ein Flussdiagramm eines Verfahrens nach Ausführungsformen der Erfindung. In einem ersten Schritt S1 werden von einem Netzwerkknoten Signale empfangen. Die Signale umfassen Echtzeitsignale und Nicht-Echtzeitsignale. Das Echtzeitmodul des Netzwerkknotens detektiert in Schritt S2 ein Echtzeitsignal und ein Nicht-Echtzeitsignal aus den empfangenen Signalen. Falls es sich um ein Echtzeitsignal handelt, wird dieses Echtzeitsignal durch das Echtzeitmodul an einen der Netzwerkanschlüsse weitergeleitet in Schritt S3. Falls es sich um ein Nicht-Echtzeitsignal handelt, wird dieses Signal in Schritt S4 an das Nicht-Echtzeitmodul des Netzwerkknotens weitergeleitet.

Im Anschluss an Schritt S3 wird das Echtzeitsignal in Schritt S5 über einen der Netzwerkanschlüsse ausgegeben. Im Anschluss an Schritt S4 wird in Schritt S6 detektiert, ob der Netzwerkanschluss, über den das Nicht-Echtzeitsignal ausgegeben werden soll, belegt ist. Beispielsweise könnte der Netzwerkanschluss durch die Weiterleitung des Echtzeitsignals belegt sein. In diesem Fall wird die Weiterleitung des Nicht-Echtzeitsignals solange verzögert, wie der betreffende Netzwerkanschluss belegt ist. Die Verzögerung der Weiterleitung kann auch dann stattfinden, wenn die Weiterleitung eines Echtzeitsignals über diesen Netzwerkanschluss nur geplant ist und noch nicht stattfindet.

Falls der Netzwerkanschluss, über den das Nicht-Echtzeitsignal ausgegeben werden soll, frei ist, wird in Schritt S7 das Nicht-Echtzeitsignal an das Echtzeitmodul weitergeleitet. Das Echtzeitmodul gibt dann das Nicht-Echtzeitsignal über den betreffenden Netzwerkanschluss aus.

Es ist wichtig zu beachten, dass in Schritt S6 die Ausgabe des Nicht-Echtzeitsignals solange verzögert wird, wie der Netzwerkanschluss durch Weiterleitung des Echtzeitsignals belegt ist. Die Schritte S5 und S6 erfolgen zeitgleich. Solange das Echtzeitsignal über den Netzwerkanschluss ausgegeben wird, wird die Weiterleitung des Nicht-Echtzeitsignals verzögert. Zusätzlich können auch die Schritte S5 und S3 zeitgleich stattfinden. Dies ist der Fall, wenn die Weiterleitung des Nicht-Echtzeitsignals schon dann verzögert werden soll, wenn die Ausgabe eines Nicht-Echtzeitsignals über den Netzwerkanschluss geplant ist. In Schritt S3 wird die Ausgabe des Echtzeitsignals über den Netzwerkanschluss geplant. Die Weiterleitung des Nicht-Echtzeitsignals wird bereits dann in Schritt S6 verzögert.

## Patentansprüche

1. Verfahren zur Echtzeitkommunikation in einem Automatisierungsnetzwerk, wobei das Automatisierungsnetzwerk mehrere Netzwerkgeräte und zumindest einen Netzwerkknoten (100) umfasst, wobei der Netzwerkknoten (100) Netzwerkanschlüsse (104) zum Empfang und zur Ausgabe von Signalen und ein Echtzeitmodul (101) zur Weiterleitung von Echtzeitsignalen und ein Nicht-Echtzeitmodul (102) zur Weiterleitung von Nicht-Echtzeitsignalen aufweist, und wobei das Verfahren die folgenden Schritte umfasst:
- Empfang (S1) von Signalen, die zumindest ein Echtzeitsignal und zumindest ein Nicht-Echtzeitsignal umfassen, durch die Netzwerkanschlüsse (104),
- Detektion (S2) des zumindest einen Echtzeitsignals und des zumindest einen Nicht-Echtzeitsignals durch das Echtzeitmodul (101),
- Weiterleitung (S4) des zumindest einen Nicht-Echtzeitsignals durch das Echtzeitmodul (101) an das Nicht-Echtzeitmodul (102),
- Weiterleitung (S7) des zumindest einen Nicht-Echtzeitsignals durch das Nicht-Echtzeitmodul (102) an einen der Netzwerkanschlüsse an einem Weiterleitungszeitpunkt, wobei die Weiterleitung über das Echtzeitmodul (101) erfolgt, und wobei das Echtzeitmodul (101) die Weiterleitung unterbinden oder verzögern kann,
- Weiterleitung (S3) des zumindest einen Echtzeitsignals durch das Echtzeitmodul (101) an den Netzwerkanschluss (104),
- Ausgabe (S5; S7) des zumindest einen Echtzeitsignals und des zumindest einen Nicht-Echtzeitsignals,
wobei die Weiterleitung des zumindest einen Nicht-Echtzeitsignals dann unterbunden oder verzögert wird, wenn zu dem Weiterleitungszeitpunkt das zumindest eine Echtzeitsignal an den Netzwerkanschluss (104) weitergeleitet wird,
wobei das Echtzeitmodul (101) zur Verzögerung der Weiterleitung des zumindest einen Nicht-Echtzeitsignals an den Netzwerkanschluss (104) ein Pause-Signal oder ein Kollisionssignal an das Nicht-Echtzeitmodul (102) sendet.

2. Verfahren nach Anspruch 1, wobei Signale, die Echtzeitsignale und Nicht-Echtzeitsignale umfassen, über jeden der Netzwerkanschlüsse empfangen und ausgegeben werden, wobei die Weiterleitung aller Nicht-Echtzeitsignale an einen der Netzwerkanschlüsse immer dann durch das Echtzeitmodul (101) verzögert oder unterbunden wird, wenn das Echtzeitmodul (101) zur gleichen Zeit zumindest ein Echtzeitsignal an den jeweiligen Netzwerkanschluss (104) weiterleitet.

3. Verfahren nach einem der vorhergehenden Ansprüche, wobei die Detektion des zumindest einen Echtzeitsignals und des zumindest einen Nicht-Echtzeitsignals dadurch erfolgt, dass das Echtzeitmodul (101) einen Indikator des zumindest einen Nicht-Echtzeitsignals und einen Indikator des zumindest einen Echtzeitsignals oder einen Signalinhalt des zumindest einen Nicht-Echtzeitsignals und einen Signalinhalt des zumindest einen Echtzeitsignals liest, wobei der Indikator oder der Signalinhalt jeweils einen Hinweis darauf umfassen, dass es sich um das zumindest eine Echtzeitsignal oder um das zumindest ein Nicht-Echtzeitsignal handelt.

4. Verfahren nach einem der vorhergehenden Ansprüche, wobei das Echtzeitmodul (101) einen Puffer umfasst, und wobei im Puffer das zumindest eine Nicht-Echtzeitsignal so lange zwischengespeichert wird, wie die Weiterleitung des Nicht-Echtzeitsignals verzögert wird.

5. Verfahren nach einem der Ansprüche 1 bis 3, wobei zur Weiterleitung des zumindest einen Nicht-Echtzeitsignals von dem Nicht-Echtzeitmodul (102) zu dem Netzwerkanschluss (104) über das Echtzeitmodul (101) ein interner Anschluss (106) des Nicht-Echtzeitmoduls (102) verwendet wird, wobei der interne Anschluss (106) einen Anschlusstakt aufweist, der zur Weiterleitung des zumindest einen Nicht-Echtzeitsignals verwendet wird, wobei das Echtzeitmodul (101) den Anschlusstakt abschaltet, solange die Weiterleitung des zumindest einen Nicht-Echtzeitsignals an den Netzwerkanschluss (104) verzögert wird.

6. Verfahren nach Anspruch 2, wobei zur Weiterleitung der Nicht-Echtzeitsignale von dem Nicht-Echtzeitmodul (102) zu dem Netzwerkanschluss (104) über das Echtzeitmodul (101) mehrere interne Anschlüsse des Nicht-Echtzeitmoduls (102) verwendet werden, wobei ein interner Anschluss (106) jeweils einem der Netzwerkanschlüsse zugeordnet ist, wobei die internen Anschlüsse jeweils einen Anschlusstakt aufweisen, der zur Weiterleitung der Nicht-Echtzeitsignale verwendet wird, wobei das Echtzeitmodul (101) den Anschlusstakt desjenigen internen Anschlusses abschaltet, der zu dem Netzwerkanschluss (104) zugeordnet ist, der durch die Weiterleitung zumindest eines der Echtzeitsignale verwendet wird, solange die Weiterleitung des jeweiligen Nicht-Echtzeitsignals an den jeweiligen Netzwerkanschluss (104) verzögert wird.

7. Netzwerkknoten (100) für ein Automatisierungsnetzwerk mit:
- Netzwerkanschlüssen (104) zum Empfang und zur Ausgabe von Signalen, die zumindest ein Echtzeitsignal und zumindest ein Nicht-Echtzeitsignal umfassen,
- einem Echtzeitmodul (101) zur Detektion des zumindest einen Echtzeitsignals und des zumindest einen Nicht-Echtzeitsignals, wobei das Echtzeitmodul (101) zur Weiterleitung des zumindest einen Echtzeitsignals an einen der Netzwerkanschlüsse (104) ausgebildet ist und Mittel zur Weiterleitung des zumindest einen Nicht-Echtzeitsignals an ein Nicht-Echtzeitmodul (102) aufweist, wobei das Nicht-Echtzeitmodul (102) Mittel zur Weiterleitung des zumindest einen Nicht-Echtzeitsignals an einen der Netzwerkanschlüsse an einem Weiterleitungszeitpunkt aufweist, wobei die Weiterleitung über das Echtzeitmodul (101) erfolgt, und wobei das Echtzeitmodul (101) zur Unterbindung und/oder zur Verzögerung der Weiterleitung an den Netzwerkanschluss (104) ausgebildet ist,
wobei das Echtzeitmodul (101) so ausgebildet ist, dass die Weiterleitung des zumindest einen Nicht-Echtzeitsignals an den Netzwerkanschluss (104) dann unterbunden oder verzögert wird, wenn zu dem Weiterleitungszeitpunkt das zumindest eine Echtzeitsignal an den Netzwerkanschluss (104) weitergeleitet wird,
wobei das Echtzeitmodul (101) dazu ausgebildet ist, dass es zur Verzögerung der Weiterleitung des zumindest einen Nicht-Echtzeitsignals an den Netzwerkanschluss (104) ein Pause-Signal oder ein Kollisionssignal an das Nicht-Echtzeitmodul (102) sendet.

8. Automatisierungssystem mit zumindest einem Netzwerkknoten (100) nach Anspruch 7.

9. Computerlesbares Speichermedium, wobei das Speichermedium Instruktionen umfasst, die bei Ausführung durch Prozessormittel eines Netzwerkknoten (100) den Netzwerkknoten (100) zur Ausführung eines Verfahrens nach einem der Ansprüche 1-6 veranlassen.

## Claims

1. Method for real-time communication in an automation network, wherein the automation network includes a number of network devices and at least one network node (100), wherein the network node (100) comprises network terminals (104) for receiving and for outputting signals and a real-time module (101) for forwarding real-time signals and a non-real-time module (102) for forwarding non-real-time signals, and wherein the method includes the following steps:
- receiving (S1) signals, which include at least one real-time signal and at least one non-real-time signal, by means of the network terminals (104),
- detecting (S2) the at least one real-time signal and the at least one non-real-time signal by means of the real-time module (101),
- forwarding (S4) the at least one non-real-time signal by means of the real-time module (101) to the non-real-time module (102),
- forwarding (S7) the at least one non-real-time signal by means of the non-real-time module (102) to one of the network terminals at a forwarding time instant, wherein the forwarding takes place by way of the real-time module (101), and wherein the real-time module (101) may prevent or delay the forwarding,
- forwarding (S3) the at least one real-time signal by means of the real-time module (101) to the network terminal (104),
- outputting (S5; S7) the at least one real-time signal and the at least one non-real-time signal,
wherein the forwarding of the at least one non-real-time signal is then prevented or delayed if the at least one real-time signal is forwarded to the network terminal (104) at the forwarding time instant,
wherein the real-time module (101), for delaying the forwarding of the at least one non-real-time signal to the network terminal (104), sends a pause signal or a collision signal to the non-real-time module (102).

2. Method according to claim 1, wherein signals, which include real-time signals and non-real-time signals, are received and output by way of each of the network terminals, wherein the forwarding of all non-real-time signals to one of the network terminals is always then delayed or prevented by the real-time module (101), if the real-time module (101) forwards at least one real-time signal to the respective network terminal (104) at the same time.

3. Method according to one of the preceding claims, wherein the detection of the at least one real-time signal and of the at least one non-real-time signal takes place such that the real-time module (101) reads an indicator of the at least one non-real-time signal and an indicator of the at least one real-time signal or a signal content of the at least one non-real-time signal and a signal content of the at least one real-time signal, wherein the indicator or the signal content each include a notification that this is the at least one real-time signal or the at least one non-real-time signal.

4. Method according to one of the preceding claims, wherein the real-time module (101) includes a buffer, and wherein the at least one non-real-time signal is buffered in the buffer as long as the forwarding of the non real-time signal is delayed.

5. Method according to one of claims 1 to 3, wherein an internal terminal (106) of the non-real-time module (102) is used to forward the at least one non-real-time signal from the non-real-time module (102) to the network terminal (104) by way of the real-time module, wherein the internal terminal (106) comprises a terminal clock , which is used to forward the at least one non-real-time signal, wherein the real-time module (101) switches off the terminal clock as long as the forwarding of the at least one non-real-time signal to the network terminal (104) is delayed.

6. Method according to claim 2, wherein a number of internal terminals of the non-real-time module (102) are used to forward the non-real-time signals from the non-real-time module (102) to the network terminal (104) by way of the real-time module (101), wherein an internal terminal (106) is assigned to one of the network terminals in each instance, wherein the internal terminals each comprise a terminal clock, which is used to forward the non-real-time signals, wherein the real-time module (101) switches off the terminal clock of that internal terminal which is assigned to the network terminal (104) which is used by the forwarding of at least one of the real-time signals, as long as the forwarding of the respective non-real-time signal to the respective network terminal (104) is delayed.

7. Network node (100) for an automation network having:
- network terminals (104) for receiving and outputting signals, which include at least one real-time signal and at least one non-real-time signal,
- a real-time module (101) for detecting the at least one real-time signal and the at lest one non-real-time signal, wherein the real-time module (101) is embodied for forwarding the at least one real-time signal to one of the network terminals (104) and comprises means for forwarding the at least one non-real-time signal to a non real-time module (102),
wherein the non-real-time module (102) comprises means for forwarding the at least one non-real-time signal to one of the network terminals at a forwarding time instant, wherein the forwarding takes place by way of the real-time module (101), and wherein the real-time module (101) is embodied to prevent and/or delay the forwarding to the network terminal (104), wherein the real-time module (101) is embodied such that the forwarding of the at least one non-real-time signal to the network terminal (104) is then prevented or delayed if the at least one real-time signal is forwarded to the network terminal (104) at the forwarding time instant,
wherein the real-time module (101) is embodied to this end such that it sends a pause signal or a collision signal to the non-real-time module (102) in order to delay the forwarding of the at least one non real-time signal to the network terminal (104).

8. Automation system having at least one network node (100) according to claim 7.

9. Computer-readable storage medium, wherein the storage medium includes instructions, which trigger the network node (100) to execute a method according to one of claims 1 - 6 during execution by processor means of a network node (100).

## Revendications

1. Procédé de communication en temps réel dans un réseau d'automatisation, dans lequel le réseau d'automatisation comprend plusieurs appareils de réseau et au moins un noeud ( 100 ) de réseau, le noeud ( 100 ) de réseau ayant des connexions ( 104 ) de réseau, pour la réception et l'émission de signaux, et un module ( 101 ) en temps réel, pour l'acheminement de signaux en temps réel, et un module ( 102 ) qui n'est pas en temps réel, pour l'acheminement de signaux qui ne sont pas temps réel, le procédé comprenant les stades suivants :
- réception ( S1 ) par les connexions ( 104 ) du réseau de signaux, qui comprennent au moins un signal en temps réel et au moins un signal qui n'est pas en temps réel,
- détection ( S2 ) du au moins un signal en temps réel et du au moins un signal qui n'est pas en temps réel par le module ( 101 ) en temps réel,
- acheminement ( S4 ) par le module ( 101 ) en temps réel du au moins un signal qui n'est pas en temps réel au module ( 102 ) qui n'est pas en temps réel,
- acheminement ( S7 ) par le module ( 102 ) qui n'est pas en temps réel du au moins un signal qui n'est pas en temps réel à l'une des connexions du réseau à un instant d'acheminement, l'acheminement s'effectuant par le module ( 101 ) en temps réel, et dans lequel le module ( 101 ) en temps réel peut supprimer ou retarder l'acheminement,
- acheminement ( S3 ) du au moins un signal en temps réel par le module ( 101 ) en temps réel à la connexion ( 104 ) du réseau,
- émission ( S5; S7 ) du au moins un signal en temps réel et du au moins un signal qui n'est pas en temps réel,
dans lequel l'acheminement du au moins un signal qui n'est pas en temps réel est supprimé ou retardé, lorsque, à l'instant de l'acheminement, le au moins un signal en temps réel est acheminé à la connexion ( 104 ) du réseau,
dans lequel le module ( 101 ) en temps réel envoie au module ( 102 ) qui n'est pas en temps réel un signal de temps de repos ou un signal de collision, pour retarder l'acheminement du au moins un signal qui n'est pas en temps réel à la connexion ( 104 ) du réseau.

2. Procédé suivant la revendication 1, dans lequel des signaux, qui comprennent des signaux en temps réel et des signaux qui ne sont pas en temps réel, sont reçus et émis par chacune des connexions du réseau, l'acheminement de tous les signaux qui ne sont pas en temps réel à l'une des connexions du réseau étant retardé ou supprimé par le module ( 101 ) en temps réel, toujours lorsque, en même temps, le module ( 101 ) achemine au moins un signal en temps réel à la connexion ( 104 ) du réseau respective.

3. Procédé suivant l'une des revendications précédentes, dans lequel la détection du au moins un signal en temps réel et du au moins un signal qui n'est pas en temps réel s'effectue par le fait que le module ( 101 ) en temps réel lit un indicateur du au moins un signal qui n'est pas en temps réel et un indicateur du au moins un signal en temps réel ou un contenu du au moins un signal qui n'est pas en temps réel ou un contenu du au moins un signal en temps réel, l'indicateur ou le contenu du signal comprenant respectivement une indication que c'est au moins un signal en temps réel ou le au moins un signal qui n'est pas en temps réel.

4. Procédé suivant l'une des revendications précédentes, dans lequel le module ( 101 ) en temps réel comprend un tampon et dans lequel dans le tampon le au moins un signal qui n'est pas en temps réel est mémorisé intermédiairement, tant que l'acheminement du signal qui n'est pas en temps réel est retardé.

5. Procédé suivant l'une des revendications 1 à 3, dans lequel on utilise, pour l'acheminement du au moins un signal qui n'est pas en temps réel du module ( 102 ) qui n'est pas en temps réel à la connexion ( 104 ) du réseau par l'intermédiaire du module ( 101 ) en temps réel, une connexion ( 106 ) interne du module ( 102 ) qui n'est pas en temps réel, la connexion ( 106 ) interne ayant une cadence de connexion qui est utilisée pour l'acheminement du au moins un signal qui n'est pas en temps réel, le module ( 101 ) en temps réel arrêtant la cadence de connexion, tant que l'acheminement du au moins un signal qui n'est pas en temps réel à la connexion ( 104 ) du réseau est retardé.

6. Procédé suivant la revendication 2, dans lequel on utilise, pour l'acheminement des signaux qui ne sont pas en temps réel du module ( 102 ) qui n'est pas en temps réel à la connexion ( 104 ) du réseau par l'intermédiaire du module ( 101 ) en temps réel, plusieurs connexions internes du module ( 102 ) qui n'est pas en temps réel, une connexion ( 106 ) interne étant associée respectivement à l'une des connexions du réseau, les connexions internes ayant respectivement une cadence de connexion qui est utilisée pour l'acheminement des signaux qui ne sont pas en temps réel, le module ( 101 ) en temps réel arrêtant la cadence de connexion de la connexion interne qui est associée à la connexion ( 104 ) du réseau utilisée pour l'acheminement d'au moins l'un des signaux en temps réel, tant que l'acheminement des signaux respectifs qui ne sont pas en temps réel à la connexion ( 104 ) du réseau respective est retardé.

7. Noeud ( 100 ) de réseau pour un réseau d'automatisation comprenant :
- des connexions ( 104 ) de réseau, pour la réception et l'émission de signaux qui comprennent au moins un signal en temps réel et au moins un signal qui n'est pas en temps réel,
- un module ( 101 ) en temps réel, pour la détection du au moins un signal en temps réel et du au moins un signal qui n'est pas en temps réel, le module ( 101 ) en temps réel étant constitué, pour l'acheminement du au moins un signal en temps réel, à l'une des connexions ( 104 ) du réseau et ayant des moyens d'acheminement du au moins un signal qui n'est pas en temps réel à un module ( 102 ) qui n'est pas en temps réel, le module ( 102 ) qui n'est pas en temps réel ayant des moyens d'acheminement du au moins un signal qui n'est pas en temps réel à l'une des connexions du réseau à un instant d'acheminement, l'acheminement s'effectuant par le module ( 101 ) en temps réel et le module ( 101 ) en temps réel étant constitué pour supprimer et/ou pour retarder l'acheminement à la connexion ( 104 ) du réseau,
dans lequel le module ( 101 ) en temps réel est tel que l'acheminement du au moins un signal qui n'est pas en temps réel à la connexion ( 104 ) du réseau est supprimé ou retardé, lorsque, à l'instant d'acheminement, le au moins un signal en temps réel est acheminé à la connexion ( 104 ) du réseau,
dans lequel le module ( 101 ) en temps réel est tel qu'il envoie, pour retarder l'acheminement du au moins un signal qui n'est pas en temps réel à la connexion ( 104 ) du réseau, un signal de temps de repos ou un signal de collision au module ( 102 ) qui n'est pas en temps réel.

8. Système d'automatisation ayant au moins un noeud ( 100 ) de réseau suivant la revendication 7.

9. Support de mémorisation pouvant être lu par un ordinateur, le support de mémorisation comprenant des instructions qui, lorsqu'elles sont exécutées par des moyens de processeur d'un noeud ( 100 ) de réseau, font que le noeud ( 100 ) de réseau exécute un procédé suivant l'une des revendications 1 à 6.
